# EUROPEAN PATENT APPLICATION

(11) **EP 4 696 409 A1**
(43) Date of publication of application: **18.02.2026**
(21) Application number: 25768621.2
(22) Date of filing: 05.03.2025
(51) Int. Cl.: B01J 19/24, B01J 19/00, B01J 8/02

(54) **ELECTRICALLY HEATED REACTOR**

(30) Priority: 05.03.2024 KR 20240031402
(71) Applicant: LG Chem, Ltd., Seoul 07336 (KR)
(72) Inventor: PARK, Hongseok, Daejeon 34122 (KR); KWON, Hyun Jee, Daejeon 34122 (KR); KANG, Mooseong, Daejeon 34122 (KR); CHOI, Jaehoon, Daejeon 34122 (KR)
(74) Representative: Hoffmann Eitle
(86) International application number: PCT/KR2025/002917
(87) International publication number: WO 2025/188065

(57) **Abstract**

An electrically heated reactor is disclosed. The electrically heated reactor includes a housing having a housing inlet formed on one side portion in a first direction into which a reactant flows, and a housing outlet formed on the other side portion in the first direction from which a reacted product is discharged, a heating plate disposed on one side portion or the other side portion of the housing and generating heat by receiving current from a power source, and at least one heat transfer member extending from the heating plate toward the other side or one side in the first direction, having a catalyst coated on a surface, and transferring heat generated from the heating plate toward the other side or the one side in the first direction to heat the catalyst.

## Description

### [Technical Field]

### CROSS-REFERENCE TO RELATED APPLICATION

This application claims priority to and the benefit of Korean Patent Application No. 10-2024-0031402 filed at the Korean Intellectual Property Office on March 5, 2024, the entire contents of which are incorporated herein by reference.

The present disclosure relates to an electrically heated reactor, and more particularly, to an electrically heated reactor that directly heats a catalyst by coating the catalyst on a heat transfer member thermally connected to an electrically heated heating plate.

### [Background Art]

In the chemical industry, natural gas is used as a fuel to maintain high temperatures in various facilities (e.g., crackers, reformers, reactors, and boilers). However, heating by burning natural gas is not only inefficient in terms of energy consumption, but is also a main culprit of carbon emissions, making it difficult to deal with the climate change crisis.

A conventional reactor that heats a catalyst with combustion heat includes at least one reaction tube filled with a solid catalyst therein. The solid catalyst inside the reaction tube is heated by heating a heat exchange medium (e.g., gas) with an external heat source and injecting the heated heat exchange medium into the reactor. The conventional reactor is not energy efficient because it heats the solid catalyst through heat exchange with the heat exchange medium.

The above information disclosed in this Background section is provided only to facilitate understanding of the background of the present disclosure, and may therefore include information that is not a part of the prior art that would be already known to those skilled in the art to which the present disclosure pertains.

### [Disclosure]

### [Technical Problem]

An embodiment of the present disclosure attempts to provide an electrically heated reactor that directly heats a catalyst by coating the catalyst on a heat transfer member thermally connected to an electrically heated heating plate.

### [Technical Solution]

An electrically heated reactor according to an embodiment of the present disclosure includes a housing having a housing inlet formed on one side portion in a first direction into which a reactant flows, and a housing outlet formed on the other side portion in the first direction from which a reacted product is discharged, a heating plate disposed on one side portion or the other side portion of the housing and generating heat by receiving current from a power source, and at least one heat transfer member extending from the heating plate toward the other side or one side in the first direction, having a catalyst coated on a surface, and transferring heat generated from the heating plate toward the other side or the one side in the first direction to heat the catalyst.

The electrically heated reactor may further include a distribution plate disposed in a second direction perpendicular to the first direction on the one side portion of the housing, and formed of a plurality of distribution plate penetration holes through which the reactant passes to evenly distribute the reactant introduced into the housing inlet.

In one aspect, the housing may include an upper plate disposed on the other side of the housing and closing the other side of the housing, and the heating plate may be disposed on the other side of the upper plate and at least one heat transfer member may extend through the upper plate into an interior of the housing.

A first insulator may be disposed between the heating plate and the upper plate.

Each heat transfer member may have a solid rod shape, a tube shape, a honeycomb shape, or a metal foam shape.

In some other aspects, the electrically heated reactor may further include at least one reaction tube disposed inside the housing, wherein each reaction tube may surround each heat transfer member, a tube inlet may be formed on one side of each reaction tube such that the reactant introduced into the housing inlet is introduced into each reaction tube through the tube inlet, the reactant may move to the other side in the first direction in each reaction tube and contact and react with the catalyst coated on the surface of the corresponding heat transfer member, and a tube outlet may be formed on the other side of each reaction tube such that the reacted product is discharged outside each reaction tube.

The housing may include a lower plate mounted on one side portion of the interior of the housing to support one side portion of the at least one reaction tube, or an upper plate mounted on the other side portion of the interior of the housing to support the other side portion of the at least one reaction tube.

In another aspect, the heating plate may be disposed on the other side portion of the housing, and the at least one heat transfer member may extend toward the one side in the first direction, and the electrically heated reactor may further include a first insulator connecting the heating plate to the housing to insulate the housing from the heating plate.

In another aspect, the heating plate may be disposed on the one side portion of the housing, and the at least one heat transfer member may extend toward the other side in the first direction, and the electrically heated reactor may further include a first insulator connecting the heating plate to the housing to insulate the housing from the heating plate.

At least one heating plate penetration hole connected to the tube inlet may be formed in the heating plate.

The housing may include both the upper plate and the lower plate, and the electrically heated reactor may further include a second insulator disposed between the upper plate and the lower plate inside the housing.

An inert bead may be disposed inside each reaction tube.

### [Advantageous Effects]

According to the present disclosure, energy efficiency may be improved by coating a catalyst on a heat transfer member thermally connected to an electrically heated heating plate to directly heat the catalyst.

Additionally, it is possible to reduce energy consumption because only the catalyst is heated without heating the entire housing or reaction tube.

Furthermore, the temperature of the catalyst on the heat transfer member may be maintained uniformly, thereby suppressing the occurrence of hot spots or cold spots.

In addition, any advantages which may be acquired or inferred from the embodiments of the present disclosure are directly or implicitly disclosed in the detailed description of the embodiments of the present disclosure. That is, various advantages inferred from the embodiments of the present disclosure are disclosed in the detailed description that follows.

### [Description of the Drawings]

Embodiments of the present disclosure may be better understood by reference to the following description in conjunction with the accompanying drawings, in which like reference numerals refer to identical or functionally similar elements.
FIG. 1 is a schematic diagram illustrating an electrically heated reactor according to an embodiment of the present disclosure.
FIG. 2 is a schematic diagram illustrating the electrically heated reactor according to another embodiment of the present disclosure.
FIG. 3 is a schematic diagram illustrating the electrically heated reactor according to another embodiment of the present disclosure.
FIG. 4 is a schematic diagram illustrating an example of a reaction tube used in embodiments of the present disclosure.

The drawings referenced above are not necessarily drawn to scale, but are to be understood as presenting rather simplified representations of various preferred features that illustrate the basic principles of the present disclosure. For example, specific design features of the present disclosure, including specific dimensions, directions, positions, and shapes, will be determined in part by the particular intended application and usage environment.

### [Mode for Invention]

The terminology used herein is for the purpose of describing particular embodiments only and is not intended to be limiting of the present disclosure. As used herein, singular forms are intended to include plural forms as well, unless the context clearly indicates otherwise. It should be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any one or all combinations of one or more related items.

Additionally, it should be understood that one or more of the methods or aspects thereof below may be executed by at least one controller. The term "controller" may refer to a hardware device that includes memory and a processor. The memory is configured to store program instructions, and the processor is specifically programmed to execute the program instructions to perform one or more processes described in more detail below. The controller may control the operation of units, modules, components, devices, or the like, as described herein. Additionally, it should be understood that the methods below may be implemented by a device including a controller together with one or more other components, as would be recognized by those skilled in the art.

Additionally, the controller of the present disclosure may be implemented as a non-transitory computer-readable recording medium including executable program instructions executed by a processor. Examples of computer-readable recording media include, but are not limited to, ROMs, RAMs, compact disc (CD) ROMs, magnetic tapes, floppy disks, flash drives, smart cards, and optical data storage devices. The computer-readable recording medium may also be distributed across a computer network so that program instructions may be stored and executed in a distributed manner, such as on a telematics server or a controller area network (CAN).

According to the present disclosure, an electrically heated reactor may include a housing having a housing inlet formed on one side through which a reactant flows in a first direction, and a housing outlet formed on the other side through which a reacted product is discharged in the first direction, a distribution plate disposed in a second direction perpendicular to the first direction on one side of the housing, and having a plurality of distribution plate penetration holes formed through which the reactant passes to evenly distribute the reactant introduced into the housing inlet, a heating plate disposed on one side or the other side of the housing and generating heat by receiving current from a power source, and at least one heat transfer member extending from the heating plate in a first direction toward the other side or one side, having a catalyst coated on the surface, and transferring heat generated from the heating plate in the first direction toward the other side or one side to heat the catalyst. Energy efficiency may be improved because the heat generated from the heating plate is directly transferred to the catalyst coated on the surface of the heat transfer member through the heat transfer member. In addition, energy consumption may be reduced because only the catalyst coated on the surface is heated through the heat transfer member without heating the entire housing. Additionally, the temperature of the catalyst may be maintained or controlled uniformly by controlling the current introduced to the heating plate.

Hereinafter, embodiments of the present disclosure will be described in detail with reference to the attached drawings.

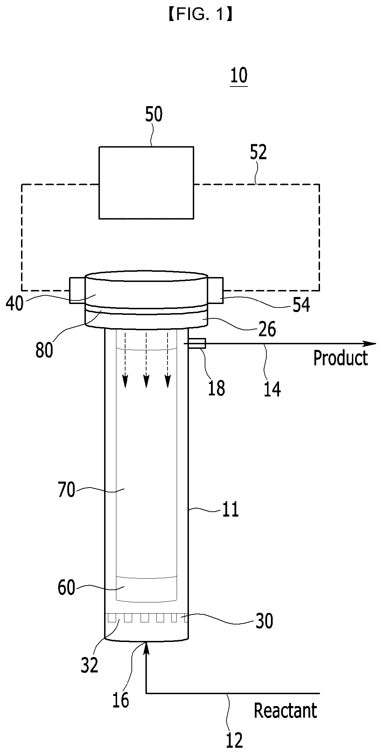

FIG. 1 is a schematic diagram illustrating an electrically heated reactor according to an embodiment of the present disclosure.

As illustrated in FIG. 1, an electrically heated reactor 10 according to an embodiment of the present disclosure includes a housing 11. The housing 11 is generally provided in a hollow cylindrical shape, but the shape of the housing 11 is not limited to a hollow cylindrical shape.

A housing inlet 16 is formed on one side (e.g., lower side) of the housing 11 in a first direction (e.g., vertical direction), and the housing inlet 16 is connected to an inflow line 12 so that a gaseous reactant is introduced into the interior of the housing 11 through the inflow line 12 and the housing inlet 16. The gaseous reactant moves upward in the housing 11, contacts a catalyst 70, and causes a reaction by the catalyst 70 to be converted into products. A housing outlet 18 is formed on the other side (e.g., upper side) of the housing 11 in the first direction, and the housing outlet 18 is connected to an outflow line 14. The product that has reacted by contacting the catalyst 70 inside the housing 11 is discharged through the housing outlet 18 to the outflow line 14.

The housing 11 includes an upper plate 26 that is disposed on the other side of the housing 11 and closes the other side of the housing 11. The upper plate 26 closes the other side of the housing 11, thereby preventing the reacted product from leaking out of the other side of the housing 11 and allowing the reacted product to be discharged through the housing outlet 18 to the outflow line 14.

In order for the catalyst 70 to cause the reactant to react, the temperature of the catalyst 70 must be increased above a set activation temperature (e.g., 600°C to 700°C). In order to increase the temperature of the catalyst 70, the electrically heated reactor 10 further includes a heating plate 40 and a heat transfer member 60.

The heating plate 40 is disposed on the other side of the housing 11, particularly on the other side of the upper plate 26, and extends in a second direction (e.g., horizontal direction) perpendicular to the first direction. The heating plate 40 is electrically connected to a power source 50 and receives current from the power source 50. The heating plate 40 may be manufactured from an alloy material (e.g., Ni-Cr, Fe-Cr, Fe-Ni-Cr, Fe-Cr-Al, etc.) having high resistivity to generate heat by current applied from the power source 50. A first insulator 80 may be disposed between the heating plate 40 and the upper plate 26 to prevent heat generated from the heating plate 40 or current applied to the heating plate 40 from flowing to the housing 11.

The heat transfer member 60 has a substantially solid rod shape and includes one side and the other side in the first direction. The other side of the heat transfer member 60 is connected to the heating plate 40 by penetrating the upper plate 26 and the first insulator 80, and one side of the heat transfer member 60 extends from the heating plate 40 to one side. The shape of the heat transfer member 60 is not limited to a solid rod shape, and may have a tube shape, honeycomb shape, or metal foam shape to increase the surface area.

The catalyst 70 is coated on the surface of the heat transfer member 60. The heat transfer member 60 may transfer heat generated from the heating plate 40 to the catalyst 70 on its surface to uniformly maintain or control the temperature of the catalyst 70. For this purpose, the heat transfer member 60 may be manufactured from a material with high thermal conductivity.

The electrically heated reactor 10 may further include a distribution plate 30. The distribution plate 30 is disposed close to the housing inlet 16 inside the housing 11-that is, on one side of the housing 11-and extends in the second direction. At least one distribution plate penetration hole 32 is provided in the distribution plate 30, and the reactant introduced into the interior of the housing 11 through the housing inlet 16 passes through the distribution plate penetration hole 32 and moves to the other side (e.g., the upper side) of the distribution plate 30. In this process, the reactant introduced into the interior of the housing 11 is dispersed in the second direction and moves in the first direction. Therefore, reaction efficiency may be improved by evenly contacting the reactant and the catalyst 70.

The electrically heated reactor 10 further includes the power source 50. The power source 50 is electrically connected to the heating plate 40 through a wire 52 and applies current to the heating plate 40. A connector 54 to which the wire 52 is connected is provided on the heating plate 40. The power source 50 may be an AC power source or a DC power source.

On the other hand, the temperature of the catalyst 70 may be controlled according to the target reaction, and the temperature of the catalyst 70 may be controlled by adjusting the method of applying current from the power source 50 to the heating plate 40.

In an example, when a current of a constant size is continuously applied to the heating plate 40, the temperature of the catalyst 70 may be kept constant regardless of the location. That is, the temperature of the catalyst 70 close to the heating plate 40 and the temperature of the catalyst 70 far from the heating plate 40 may be the same. This method of applying current may be advantageous for reactions in which the temperature of the catalyst 70 must be kept constant, such as an endothermic reaction.

In another example, when a peak current of a certain size is periodically applied to the heating plate 40, the temperature of the catalyst 70 may gradually decrease depending on the distance from the heating plate 40. In other words, a temperature gradient is implemented from the temperature of the catalyst 70 close to the heating plate 40 to the temperature of the catalyst 70 far from the heating plate 40, and the temperature of the catalyst 70 close to the heating plate 40 may be higher than the temperature of the catalyst 70 far from the heating plate 40. This method of applying current may be advantageous when both preheating of the reactant and the main reaction occur within the housing 11.

As such, according to embodiments of the present disclosure, energy efficiency may be improved by coating the catalyst 70 on the heat transfer member 60 that is connected to the electrically heated heating plate 40 to transfer heat, thereby directly heating the catalyst. In addition, energy consumption may be reduced because only the catalyst 70 is heated without heating the entire housing 11. In addition, by controlling the current applied to the heating plate 40, the temperature of the catalyst 70 may be kept constant or adjusted depending on the type of reaction, thereby suppressing the occurrence of hot spots or cold spots.

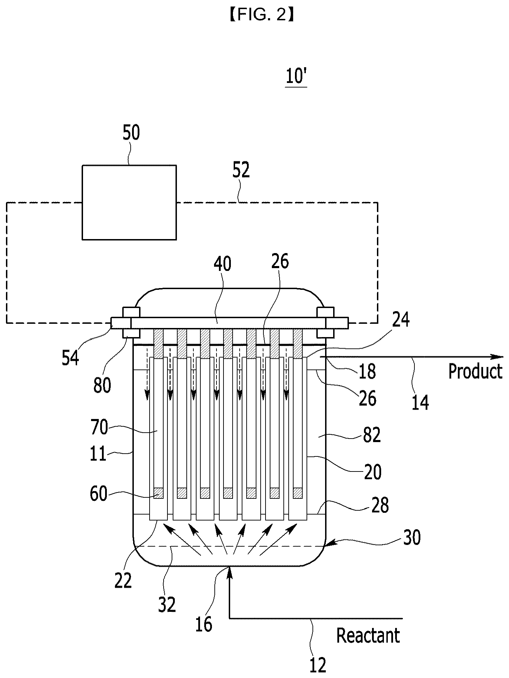

FIG. 2 is a schematic diagram illustrating the electrically heated reactor according to another embodiment of the present disclosure.

As shown in FIG. 2, an electrically heated reactor 10' according to another embodiment of the present disclosure includes the housing 11, the distribution plate 30, at least one reaction tube 20, the heating plate 40, the heat transfer member 60, and the power source 50.

The housing inlet 16 is formed on one side (e.g., lower side) of the housing 11 in the first direction, and the housing inlet 16 is connected to the inflow line 12 so that a gaseous reactant is introduced into the interior of the housing 11 through the inflow line 12 and the housing inlet 16. The housing outlet 18 is formed on the other side (e.g., upper side) of the housing 11 in the first direction, and the housing outlet 18 is connected to the outflow line 14. The reactant reacts in the interior of the housing 11 while moving in the first direction to the other side, and the product generated as a result of the reaction is discharged to the outflow line 14 through the housing outlet 18.

The distribution plate 30 is disposed close to the housing inlet 16 inside the housing 11-that is, on one side of the housing 11-and extends in the second direction. At least one distribution plate penetration hole 32 is provided in the distribution plate 30, and the reactant introduced into the interior of the housing 11 through the housing inlet 16 passes through the distribution plate penetration hole 32 and moves to the other side (e.g., upper side) of the distribution plate 30. In this process, the reactant introduced into the interior of the housing 11 is dispersed in the second direction and moves in the first direction.

At least one reaction tube 20 is disposed on the other side of the distribution plate 30 inside the housing 10 and extends in the first direction. The at least one reaction tube 20 is mounted inside the housing 10 by the upper plate 26 and the lower plate 28. More specifically, the upper plate 26 is affixed to the other side inside the housing 10, and the other side of each reaction tube 20 passes through the upper plate 26 and is disposed on the other side of the upper plate 26. The lower plate 28 is affixed to one side inside the housing 10, and one side of each reaction tube 20 passes through the lower plate 28 and is disposed on one side of the lower plate 28. That is, each reaction tube 20 is fitted into the upper plate 26 and the lower plate 28, one side of each reaction tube 20 is disposed on one side of the lower plate 28, and the other side of each reaction tube 20 is disposed on the other side of the upper plate 26.

A tube inlet 22 is formed on one side of each reaction tube 20, and the reactant passing through the distribution plate penetration hole 32 flows into the interior of each reaction tube 20 through the tube inlet 22 and flows to the other side in the first direction. The reactant moves to the other side inside each reaction tube 20, contacts the catalyst 70, and is caused to react by the catalyst 70 to be converted into a product. A tube outlet 24 is formed on the other side of each reaction tube 20, and the product flows into the interior of the housing 11 on the other side of the upper plate 26 through the tube outlet 24, and is discharged into the outflow line 14 through the housing outlet 18. The lower plate 28 affixes one side of each reaction tube 20 to the housing 11 and at the same time allows the reactant passing through the distribution plate penetration hole 32 to flow into the tube inlet 22. In addition, the upper plate 26 affixes the other side of each reaction tube 20 to the housing 11 and at the same time allows the product flowing out through the tube outlet 24 to be discharged to the housing outlet 18. A second insulator 82 is disposed between the upper plate 26 and the lower plate 28 inside the housing 11. The second insulator 82 may surround at least one reaction tube 20 to prevent heat from at least one reaction tube 20 from escaping to the outside, thereby improving energy efficiency.

The heating plate 40 is disposed on the other side of the housing 11, particularly on the other side of the upper plate 26, and extends in the second direction (e.g., horizontal direction) perpendicular to the first direction. The heating plate 40 is electrically connected to the power source 50 and receives current from the power source 50. The heating plate 40 may be made of an alloy material (e.g., Ni-Cr, Fe-Cr, Fe-Ni-Cr, Fe-Cr-Al, etc.) having high resistivity to generate heat by current applied from the power source 50. To prevent heat generated from the heating plate 40 or current applied to the heating plate 40 from flowing to the housing 11, the heating plate 40 may be connected to the housing 11 through the first insulator 80.

The heat transfer member 60 includes one side and the other side in the first direction. The other side of the heat transfer member 60 penetrates the upper plate 26 and is connected to the heating plate 40, and one side of the heat transfer member 60 extends from the heating plate 40 to one side in the first direction. The shape of the heat transfer member 60 may be, but is not limited to, a solid rod shape, a tube shape, a honeycomb shape, or a metal foam shape. Accordingly, the contact area between the catalyst 70 coated on the surface of the heat transfer member 60 and the reactant may be increased to increase reaction efficiency. The heat transfer member 60 may transfer heat generated from the heating plate 40 to the catalyst 70 on its surface to uniformly maintain or control the temperature of the catalyst 70. For this purpose, the heat transfer member 60 may be manufactured from a material with high thermal conductivity.

The power source 50 is electrically connected to the heating plate 40 through the wire 52 and applies current to the heating plate 40. The connector 54 to which the wire 52 is connected is provided on the heating plate 40. The power source 50 may be an AC power source or a DC power source.

In another embodiment of the present disclosure, the electrically heated reactor 10' may also control the temperature of the catalyst 70 according to a target reaction, similarly to the electrically heated reactor 10 according to an embodiment of the present disclosure, and the temperature of the catalyst 70 may be controlled by adjusting the method of applying current from the power source 50 to the heating plate 40.

In an example, when a current of a constant size is continuously applied to the heating plate 40, the temperature of the catalyst 70 may be kept constant regardless of the location. That is, the temperature of the catalyst 70 close to the heating plate 40 and the temperature of the catalyst 70 far from the heating plate 40 may be the same. This method of applying current may be advantageous for reactions in which the temperature of the catalyst 70 must be kept constant, such as an endothermic reaction.

In another example, when a peak current of a certain size is periodically applied to the heating plate 40, the temperature of the catalyst 70 may gradually decrease depending on the distance from the heating plate 40. In other words, a temperature gradient is implemented from the temperature of the catalyst 70 close to the heating plate 40 to the temperature of the catalyst 70 far from the heating plate 40, and the temperature of the catalyst 70 close to the heating plate 40 may be higher than the temperature of the catalyst 70 far from the heating plate 40. This method of applying current may be advantageous when both preheating of the reactant and the main reaction occur within the housing 11.

As such, according to embodiments of the present disclosure, energy efficiency may be improved by coating the catalyst 70 on the heat transfer member 60 that is connected to the electrically heated heating plate 40 to transfer heat, thereby directly heating the catalyst. In addition, energy consumption may be reduced because only the catalyst 70 is heated without heating the entire housing 11 or at least one reaction tube 20. In addition, by controlling the current applied to the heating plate 40, the temperature of the catalyst 70 may be kept constant or adjusted depending on the type of reaction, thereby suppressing the occurrence of hot spots or cold spots.

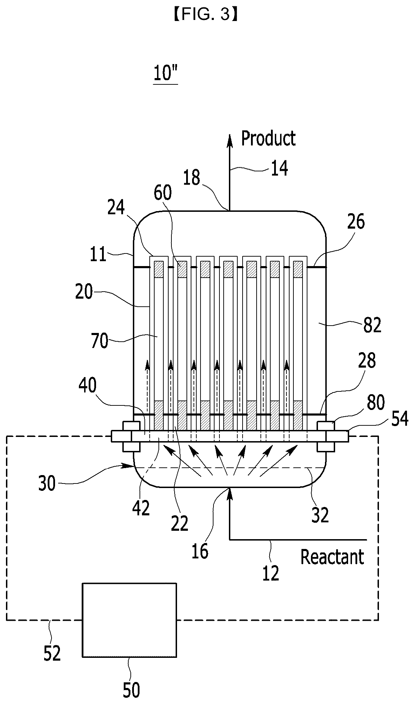

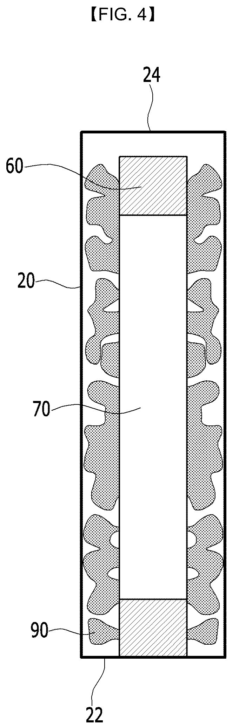

FIG. 3 is a schematic diagram illustrating the electrically heated reactor according to the other embodiment of the present disclosure, and FIG. 4 is a schematic diagram illustrating an example of a reaction tube used in embodiments of the present disclosure.

As shown in FIG. 3, an electrically heated reactor 10" according to another embodiment of the present disclosure includes the housing 11, the distribution plate 30, at least one reaction tube 20, the heat transfer member 60, and the power source 50.

The housing inlet 16 is formed on one side (e.g., lower side) of the housing 11 in the first direction, and the housing inlet 16 is connected to the inflow line 12, so that a gaseous reactant is introduced into the interior of the housing 11 through the inflow line 12 and the housing inlet 16. The housing outlet 18 is formed on the other side (e.g., upper side) of the housing 11 in the first direction, and the housing outlet 18 is connected to the outflow line 14. The reactant reacts in the interior of the housing 11 while moving in the first direction to the other side, and the product generated as a result of the reaction is discharged to the outflow line 14 through the housing outlet 18.

The distribution plate 30 is disposed close to the housing inlet 16 inside the housing 11-that is, on one side of the housing 11-and extends in the second direction. At least one distribution plate penetration hole 32 is provided in the distribution plate 30, and the reactant introduced into the interior of the housing 11 through the housing inlet 16 passes through the distribution plate penetration hole 32 and moves to the other side (e.g., upper side) of the distribution plate 30. In this process, the reactant introduced into the interior of the housing 11 is dispersed in the second direction and moves in the first direction.

The heating plate 40 is disposed on one side of the housing 11, particularly on the other side of the distribution plate 30, and extends in the second direction (e.g., horizontal direction) perpendicular to the first direction. The heating plate 40 is electrically connected to the power source 50 and receives current from the power source 50. The heating plate 40 may be made of an alloy material (e.g., Ni-Cr, Fe-Cr, Fe-Ni-Cr, Fe-Cr-Al, etc.) having high resistivity to generate heat by current applied from the power source 50. To prevent heat generated from the heating plate 40 or current applied to the heating plate 40 from flowing to the housing 11, the heating plate 40 may be connected to the housing 11 through the first insulator 80. At least one heating plate penetration hole 42 is provided on the heating plate 40, and the reactant passing through the distribution plate penetration hole 32 passes through the heating plate penetration hole 42 and moves to the upper side of the heating plate 40.

At least one reaction tube 20 is disposed on the other side of the distribution plate 30 inside the housing 10 and extends in the first direction. The at least one reaction tube 20 is mounted inside the housing 10 by the upper plate 26 and the lower plate 28. More specifically, the upper plate 26 is affixed to the other side inside the housing 10, and the other side of each reaction tube 20 passes through the upper plate 26 and is disposed on the other side of the upper plate 26. The lower plate 28 is affixed to one side inside the housing 10, and one side of each reaction tube 20 passes through the lower plate 28 and is disposed on one side of the lower plate 28. That is, each reaction tube 20 is fitted into the upper plate 26 and the lower plate 28, one side of each reaction tube 20 is disposed on one side of the lower plate 28, and the other side of each reaction tube 20 is disposed on the other side of the upper plate 26.

The tube inlet 22 is formed on one side of each reaction tube 20, and the tube inlet 22 is connected to the heating plate penetration hole 42. Accordingly, the reactant passing through the heating plate penetration hole 42 flows into the interior of each reaction tube 20 through the tube inlet 22 and flows to the other side in the first direction. The reactant moves to the other side inside each reaction tube 20, contacts the catalyst 70, and is caused to react by the catalyst 70 to be converted into a product. A tube outlet 24 is formed on the other side of each reaction tube 20, and the product flows into the housing 11 on the other side of the upper plate 26 through the tube outlet 24, and is discharged into the outflow line 14 through the housing outlet 18. The lower plate 28 affixes one side of each reaction tube 20 to the housing 11 and at the same time allows the reactant passing through the heating plate penetration hole 42 to flow into the tube inlet 22. In addition, the upper plate 26 affixes the other side of each reaction tube 20 to the housing 11 and at the same time allows the product flowing out through the tube outlet 24 to be discharged to the housing outlet 18. The second insulator 82 is disposed between the upper plate 26 and the lower plate 28 inside the housing 11. The second insulator 82 may surround at least one reaction tube 20 to prevent heat from at least one reaction tube 20 from escaping to the outside, thereby improving energy efficiency.

The heat transfer member 60 includes one side and the other side in the first direction. One side of the heat transfer member 60 is connected to the heating plate 40, and the other side of the heat transfer member 60 extends from the heating plate 40 to the other side in the first direction. The shape of the heat transfer member 60 may be, but is not limited to, a solid rod shape, a tube shape, a honeycomb shape, or a metal foam shape. Accordingly, the contact area between the catalyst 70 coated on the surface of the heat transfer member 60 and the reactant may be increased to increase reaction efficiency. The heat transfer member 60 may transfer heat generated from the heating plate 40 to the catalyst 70 on its surface to uniformly maintain or control the temperature of the catalyst 70. For this purpose, the heat transfer member 60 may be manufactured from a material with high thermal conductivity.

On the other hand, as shown in FIG. 4, an inactive bead 90 may be disposed inside each reaction tube 20. The bead 90 may improve reaction efficiency by allowing better contact between the reactant and the catalyst 70 on the surface of the heat transfer member 60 within each reaction tube 20. The size of the bead 90 is larger than the size between each heating plate penetration hole 42 and each heat transfer member 60 so that the bead 90 may be prevented from escaping outside each reaction tube 20 through each heating plate penetration hole 42 and each heat transfer member 60.

The power source 50 is electrically connected to the heating plate 40 through the wire 52 and applies current to the heating plate 40. The connector 54 to which the wire 52 is connected is disposed on the heating plate 40. The power source 50 may be an AC power source or a DC power source.

In another embodiment of the present disclosure, the electrically heated reactor 10" may also control the temperature of the catalyst 70 according to a target reaction, similarly to the electrically heated reactor 10 according to an embodiment of the present disclosure, and the temperature of the catalyst 70 may be controlled by adjusting the method of applying current from the power source 50 to the heating plate 40.

In an example, when current of a constant size is continuously applied to the heating plate 40, the temperature of the catalyst 70 may be kept constant regardless of the location. That is, the temperature of the catalyst 70 close to the heating plate 40 and the temperature of the catalyst 70 far from the heating plate 40 may be the same. This method of applying current may be advantageous for reactions in which the temperature of the catalyst 70 must be kept constant, such as an endothermic reaction.

In another example, when a peak current of a certain size is periodically applied to the heating plate 40, the temperature of the catalyst 70 may gradually decrease depending on the distance from the heating plate 40. In other words, a temperature gradient is implemented from the temperature of the catalyst 70 close to the heating plate 40 to the temperature of the catalyst 70 far from the heating plate 40, and the temperature of the catalyst 70 close to the heating plate 40 may be higher than the temperature of the catalyst 70 far from the heating plate 40. This method of applying current may be advantageous when both preheating of the reactant and the main reaction occur within the housing 11.

As such, according to embodiments of the present disclosure, energy efficiency may be improved by coating the catalyst 70 on the heat transfer member 60 that is connected to the electrically heated heating plate 40 to transfer heat, thereby directly heating the catalyst. In addition, energy consumption may be reduced because only the catalyst 70 is heated without heating the entire housing 11 or at least one reaction tube 20. In addition, by controlling the current applied to the heating plate 40, the temperature of the catalyst 70 may be kept constant or adjusted depending on the type of reaction, thereby suppressing the occurrence of hot spots or cold spots.

While the embodiments of the present disclosure have been described in detail, it is to be understood that the disclosure is not limited to the disclosed embodiments, but on the contrary, is intended to cover various modifications and equivalent arrangements included within the spirit and scope of the appended claims.

## Claims

1. An electrically heated reactor, comprising:
a housing having a housing inlet formed on one side portion in a first direction into which a reactant flows, and a housing outlet formed on the other side portion in the first direction from which a reacted product is discharged;
a heating plate disposed on one side portion or the other side portion of the housing and generating heat by receiving current from a power source; and
at least one heat transfer member extending from the heating plate toward the other side or one side in the first direction, having a catalyst coated on a surface, and transferring heat generated from the heating plate toward the other side or the one side in the first direction to heat the catalyst.

2. The electrically heated reactor of claim 1, further comprising:
a distribution plate disposed in a second direction perpendicular to the first direction on the one side portion of the housing, and formed of a plurality of distribution plate penetration holes through which the reactant passes to evenly distribute the reactant introduced into the housing inlet.

3. The electrically heated reactor of claim 1, wherein
the housing comprises an upper plate disposed on the other side of the housing and closing the other side of the housing, and
the heating plate is disposed on the other side of the upper plate and at least one heat transfer member extends through the upper plate into an interior of the housing.

4. The electrically heated reactor of claim 3, wherein
a first insulator is disposed between the heating plate and the upper plate.

5. The electrically heated reactor of claim 1, wherein
each heat transfer member has a solid rod shape, a tube shape, a honeycomb shape, or a metal foam shape.

6. The electrically heated reactor of claim 1, further comprising:
at least one reaction tube disposed inside the housing,
wherein each reaction tube surrounds each heat transfer member, a tube inlet is formed on one side of each reaction tube such that the reactant introduced into the housing inlet is introduced into each reaction tube through the tube inlet, the reactant moves to the other side in the first direction in each reaction tube and contacts and reacts with the catalyst coated on the surface of the corresponding heat transfer member, and a tube outlet is formed on the other side of each reaction tube such that the reacted product is discharged outside each reaction tube.

7. The electrically heated reactor of claim 6, wherein the housing comprises
a lower plate mounted on one side portion of the interior of the housing to support one side portion of the at least one reaction tube; or
an upper plate mounted on the other side portion of the interior of the housing to support the other side portion of the at least one reaction tube.

8. The electrically heated reactor of claim 7, wherein
the heating plate is disposed on the other side portion of the housing, and the at least one heat transfer member extends toward the one side in the first direction, and
the electrically heated reactor further comprises a first insulator connecting the heating plate to the housing to insulate the housing from the heating plate.

9. The electrically heated reactor of claim 7, wherein
the heating plate is disposed on the one side portion of the housing, and the at least one heat transfer member extends toward the other side in the first direction, and
the electrically heated reactor further comprises a first insulator connecting the heating plate to the housing to insulate the housing from the heating plate.

10. The electrically heated reactor of claim 9, wherein
at least one heating plate penetration hole connected to the tube inlet is formed in the heating plate.

11. The electrically heated reactor of claim 7, wherein
the housing comprises both the upper plate and the lower plate, and
the electrically heated reactor further comprises a second insulator disposed between the upper plate and the lower plate inside the housing.

12. The electrically heated reactor of claim 6, wherein
an inert bead is disposed inside each reaction tube.
